# EUROPEAN PATENT SPECIFICATION

(11) **EP 4 419 581 B1**
(45) Date of publication and mention of the grant of the patent: **30.07.2025**
(21) Application number: 22797238.7
(22) Date of filing: 07.10.2022
(51) Int. Cl.: C08G 77/18, C08G 77/20, C08G 77/26, C08G 77/38, C08G 77/388

(54) **COMPOSITION AND METHOD FOR SYNTHESIS OF AN ALKOXY-FUNCTIONAL ORGANOSILOXANE OLIGOMER**
ZUSAMMENSETZUNG UND VERFAHREN ZUR SYNTHESE EINES ALKOXY-FUNKTIONALEN ORGANOSILOXANOLIGOMERS
COMPOSITION ET PROCEDE DE SYNTHESE D'UN OLIGOMERE ORGANOSILOXANE ALKOXY FONCTIONNEL

(30) Priority: 21.10.2021 US 202163270073 P
(43) Date of publication of application: 28.08.2024
(73) Proprietor: Dow Global Technologies LLC, Midland, Michigan 48674 (US); Dow Silicones Corporation, Midland, Michigan 48686 (US)
(72) Inventor: ZHOU, Xiaoyuan, Midland, Michigan 48686-0994 (US); KENNEDY, Robert, Midland, Michigan 48640 (US); YU, Decai, Midland, Michigan 48640 (US)
(74) Representative: Murgitroyd & Company
(86) International application number: PCT/US2022/077749
(87) International publication number: WO 2023/069840

(56) References cited:
- EP-A2- 0 304 701
- US-A- 6 018 011
- US-A1- 2019 194 509
- GELEST INC: "REACTIVE SILICONES: FORGING NEW POLYMER LINKS", INTERNET CITATION, 1 January 2004 (2004-01-01), XP002470135, Retrieved from the Internet <URL:http://www.gelest.com/company/pdfs/reactivesilicones.pdf> [retrieved on 20080220]

## Description

### CROSS REFERENCE TO RELATED APPLICATIONS

This application claims the benefit of U.S. Provisional Patent Application Serial No. 63/270,073 filed on 21 October 2021 under 35 U.S.C. §119 (e).

### TECHNICAL FIELD

A new alkoxy-functional organosiloxane oligomer and method for its synthesis are provided. More particularly, the new alkoxy-functional organosiloxane oligomer has a reactive moiety and can be synthesized via dehydrogenative coupling of a silicon bonded hydrogen atom and a reactive hydrogen.

### INTRODUCTION

The current method for synthesizing commercially available alkoxy-functional polyorganosiloxanes involves hydrosilylation of alkenyl-functional polyorganosiloxanes (e.g., linear polydiorganosiloxanes and/or polyorganosiloxane resins) and alkoxy-functional organohydrogensiloxane oligomers (converters) using a hydrosilylation reaction catalyst. EP0304701 A2 discloses polyalkoxysilyl-terminated polydiorganosiloxanes, methods for their preparation, and room temperature vulcanizable compositions containing them. SUMMARY

The invention is defined by the claims and any other aspects, configurations or embodiments set forth herein not falling within the scope of the claims are for information only.

An alkoxy-functional organosiloxane oligomer has formula: 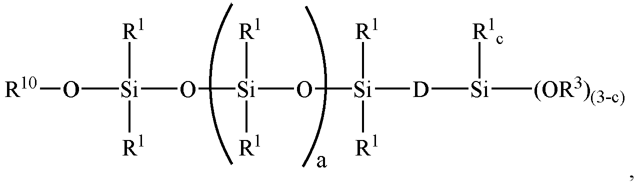 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, subscript c is 0 or 1, and R¹⁰ is a reactive moiety selected from the group consisting of 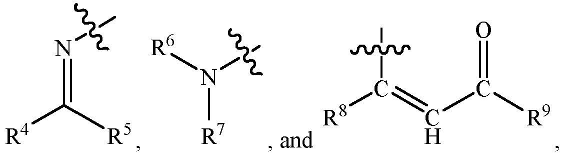 where R⁴, R⁵, R⁶, R⁷, R⁸ and R⁹ are each independently selected from the group consisting of a monovalent hydrocarbon group of 1 to 18 carbon atoms and a monovalent halogenated hydrocarbon group of 1 to 18 carbon atoms.

The alkoxy-functional organosiloxane oligomer can be synthesized by a method comprising (1) combining, under conditions for dehydrogenative silylation reaction, starting materials comprising: (A) an alkoxy-functional organohydrogensiloxane oligomer, (B) a reactive hydrogen functional compound, and (C) a precious metal catalyst.

### DETAILED DESCRIPTION

In the method described above, (A) the alkoxy-functional organohydrogensiloxane oligomer has formula: 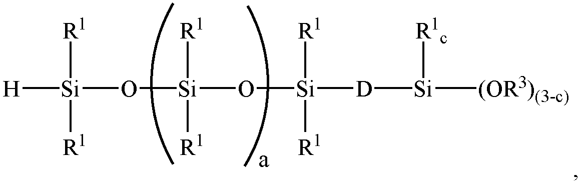 where each R¹ is independently selected from the group consisting of a monovalent hydrocarbon group of 1 to 18 carbon atoms and a monovalent halogenated hydrocarbon group of 1 to 18 carbon atoms, each D is independently a divalent hydrocarbon group of 2 to 18 carbon atoms, each subscript a is independently an integer up to 20, and each subscript c is independently 0 or 1.

Suitable monovalent hydrocarbon groups for R¹ include, but are not limited to, an alkyl group of 1 to 18 carbon atoms and an aryl group of 6 to 18 carbon atoms. Alternatively, R¹ may be an alkyl group of 6 carbon atoms or an aryl group of 6 to 10 carbon atoms. Suitable alkyl groups for R¹ are exemplified by, but not limited to, methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, as well as branched saturated hydrocarbon groups of 6 carbon atoms. Suitable aryl groups for R¹ are exemplified by, but not limited to, phenyl, tolyl, xylyl, naphthyl, benzyl, and dimethyl phenyl. Suitable monovalent halogenated hydrocarbon groups may be halogenated alkyl groups of 1 to 18 carbon atoms or halogenated aryl groups of 6 to 18 carbon atoms. Alternatively, suitable monovalent halogenated hydrocarbon groups for R¹ include, but are not limited to, a halogenated alkyl group of 1 to 6 carbon atoms, or a halogenated aryl group of 6 to 10 carbon atoms. Suitable halogenated alkyl groups for R¹ are exemplified by, but not limited to, the alkyl groups described above where one or more hydrogen atoms is replaced with a halogen atom, such as F or Cl. For example, fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl are examples of suitable halogenated alkyl groups. Suitable halogenated aryl groups for R¹ are exemplified by, but not limited to, the aryl groups described above where one or more hydrogen atoms is replaced with a halogen atom, such as F or Cl. For example, chlorobenzyl and fluorobenzyl are suitable halogenated aryl groups. Alternatively, each R¹ is independently methyl, ethyl or propyl. Each instance of R¹ may be the same or different. Alternatively, each R¹ may be a methyl group. Each R³ is in the formula above is an independently selected monovalent hydrocarbon group. The monovalent hydrocarbon group for R³ may be a monovalent hydrocarbon group as described above for R¹.

In the formula above, D represents a divalent hydrocarbon group of 2 to 18 carbon atoms. D may be linear, branched, or a combination thereof. Suitable divalent hydrocarbon groups for D include alkane-diyl groups of empirical formula -CᵣH₂ᵣ-, where subscript r is 2 to 18, alternatively 2 to 12, alternatively 2 to 8, and alternatively 2 to 6. The alkane-diyl group may be a linear alkane-diyl, e.g., -CH₂-CH₂-, -CH₂-CH₂-CH₂-, -CH₂-CH₂-CH₂-CH₂-, or -CH₂-CH₂-CH₂-CH₂-CH₂-CH₂-, or a branched alkane-diyl, e.g., 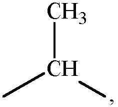 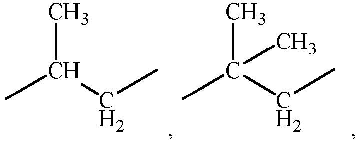 or 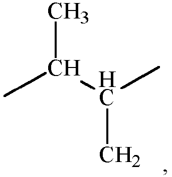 or a combination thereof. Alternatively, each D may be an alkane-diyl group of 2 to 6 carbon atoms; alternatively of 2, 3, or 6 carbon atoms. Alternatively, each D may be is -(C₂H₄)-. Alternatively, > 90 mol% of all instances of D may be linear divalent hydrocarbon groups, such as -(CH₂)-(CH₂)-.

In the formula above, subscript a is an integer up to 20. Alternatively, subscript a may be 0 to 20, alternatively subscript a may be 0 to 10; alternatively subscript a may be 0 to 5; and alternatively subscript a may be 0 or 1. Alternatively, subscript a may be 2 to 10; alternatively subscript a may be 2 to 5. Subscript c is 0 or 1. Alternatively, subscript c may be 0.

Starting material (A) may be one alkoxy-functional organohydrogensiloxane oligomer or a combination comprising two or more alkoxy-functional organohydrogensiloxane oligomers that differ from one another in at least one property such as selection of groups for R¹, selection of groups for R³, value of subscript a and value of subscript c. The alkoxy-functional organohydrogensiloxane oligomer may be prepared by known methods, such as those disclosed in PCT Patent Application Publication WO2021/050325 to Zhou, et al., PCT Patent Application Publication WO2021/050326 to Zhou, et al., U.S. Patent 11,098,163 to Gohndrone, et al., U.S. Patent 10,968,317 to Gohndrone, et al., and U.S. Patent Application Publication 2020-0231755 to Gohndrone, et al.

Starting material (B) in the method for making the alkoxy-functional organosiloxane oligomer may comprise (B1) an oxime, (B2), a hydroxylamine, or (B3) an enol. Starting material (B1), the oxime, may have formula 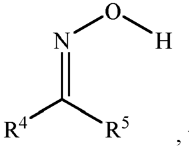 where R⁴ and R⁵ are each independently selected alkyl groups of 1 to 6 carbon atoms. Suitable alkyl groups for R⁴ and R⁵ are exemplified by, but not limited to, methyl, ethyl, propyl (e.g., iso-propyl and/or n-propyl), butyl *(e.g.,* isobutyl, n-butyl, tert-butyl, and/or sec-butyl), pentyl *(e.g.,* isopentyl, neopentyl, and/or tert-pentyl), hexyl, as well as branched saturated hydrocarbon groups of 6 carbon atoms. Alternatively, R⁴ and R⁵ may have 1 to 4 carbon atoms, alternatively 1 to 2 carbon atoms. Alternatively, R⁴ and R⁵ may each be methyl. Suitable oximes are known in the art and are commercially available, such as acetone oxime from Sigma-Aldrich, Inc. of St. Louis, Missouri, USA.

Alternatively, (B) the reactive hydrogen functional compound may comprise (B2) a hydroxylamine. The hydroxylamine may have formula 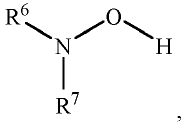 where R⁶ and R⁷ are each independently selected alkyl groups of 1 to 6 carbon atoms. Suitable alkyl groups for R⁶ and R⁷ are exemplified by, but not limited to, methyl, ethyl, propyl (e.g., iso-propyl and/or n-propyl), butyl *(e.g.,* isobutyl, n-butyl, tert-butyl, and/or sec-butyl), pentyl (*e.g.*, isopentyl, neopentyl, and/or tert-pentyl), hexyl, as well as branched saturated hydrocarbon groups of 6 carbon atoms. Alternatively, R⁶ and R⁷ may have 1 to 4 carbon atoms, alternatively 1 to 2 carbon atoms. Alternatively, R⁶ and R⁷ may each be ethyl. Suitable hydroxylamines are known in the art and are commercially available, such as dimethylhydroxylamine and diethylhydroxylamine from Sigma-Aldrich, Inc. of St. Louis, Missouri, USA.

Alternatively, (B) the reactive hydrogen functional compound may comprise (B3) an enol of formula 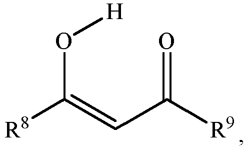 where R⁸ and R⁹ are each independently selected alkyl groups of 1 to 6 carbon atoms. Suitable alkyl groups for R⁸ and R⁹ are exemplified by, but not limited to, methyl, ethyl, propyl (e.g., iso-propyl and/or n-propyl), butyl *(e.g.,* isobutyl, n-butyl, tert-butyl, and/or sec-butyl), pentyl *(e.g.,* isopentyl, neopentyl, and/or tert-pentyl), hexyl, as well as branched saturated hydrocarbon groups of 6 carbon atoms. Alternatively, R⁸ and R⁹ may have 1 to 4 carbon atoms, alternatively 1 to 2 carbon atoms. Alternatively, R⁸ and R⁹ may each be methyl. Suitable enols are known in the art and are commercially available. For example, acetyl acetone, which will isomerize to form an enol, is commercially available from Sigma-Aldrich, Inc. of St. Louis, Missouri, USA.

Starting material (A), the alkoxy-functional organohydrogensiloxane oligomer, and starting material (B), the reactive hydrogen functional compound, may be used in amounts sufficient to provide a molar ratio of the reactive hydrogen functionality of (B) to the silyl hydride functionality of (A) [(B):(A) ratio] of at least 1:1, alternatively at least 1.5:1, while at the same time the (B):(A) ratio may be up to 5:1, alternatively up to 2:1. Alternatively, the (B):(A) ratio may be 1:1 to 5:1, alternatively 1:1 to 2:1, and alternatively 1:1 to 1.5:1.

Starting material (C) useful in the method described above is an optional precious metal catalyst capable of catalyzing dehydrogenative silylation of the silicon bonded hydrogen atoms of starting material (A) and the reactive hydrogen of starting material (B). The precious metal catalyst is optional and may be omitted. However, the precious metal catalyst may be added to speed the production of the alkoxy-functional organosiloxane oligomer.

Alternatively, (C) the precious metal catalyst useful in the method described above may be a rhodium complex. The rhodium complex may have formula: [Rh(R¹³)ₓ(R¹⁴)_{y}]_{z}, where subscript x is 1 or 2, R¹³ is a 1,5-cyclooctadiene ligand or a 2,5-norbornadiene ligand, subscript y is 0 to 2, alternatively 0 or 1, R¹⁴ is a ligand that can be activated, and subscript z is 1 or 2. Alternatively, subscript z = 2. Activating with respect to R¹⁴ may be performed by any convenient means, such as heating at a temperature less than the boiling points of (A) the alkoxy-functional organohydrogensiloxane oligomer and (B) the reactive hydrogen functional compound, adding a silver salt, or by photochemical or electrochemical means in step (1) of the method described herein. R¹⁴ may be an anionic ligand. Examples of ligands suitable for R¹⁴ include a halogen atom, a beta-ketoester ligand, a halogenated beta-ketoester ligand, an alkoxy ligand, a cyanoalkyl ligand, an aryl ligand, and a heteroaryl ligand. Examples of suitable halogen atoms include bromine (Br), chlorine (Cl) and iodine (I). Alternatively, the halogen atom may be Cl. Examples of beta-ketoester ligands include acetyl acetonate (acac). Examples of halogenated beta-ketoesters include hexafluoro acetylacetonate (hfacac). Examples of alkoxy ligands include methoxy, ethoxy, and propoxy. Alternatively the alkoxy ligand may be methoxy. Examples of suitable cyanoalkyl ligands include CH₃CN, acetonitrile, and tetrahydrofuran (THF). Examples of suitable aryl ligands include phenyl, benzyl, or indenyl. Examples of suitable heteroaryl ligands include pyridine.

Examples suitable catalysts for starting material (C) include, but are not limited to bis(rhodium cyclooctadiene chloride) [Rh(COD)Cl]₂, rhodium cyclooctadiene acetylacetonate [Rh(I)CODacac], rhodium dicyclooctadiene tetrakis(3,5-bis(trifluoromethyl)phenyl)borate [Rh(I)COD₂BARF], bis(rhodium cyclooctadiene methoxylate) [Rh(I)COD(OMe)]₂, rhodium cyclooctadiene hexafluoro acetylacetonate [Rh(I)COD(hfacac)], Rh(I)COD(CH₃CN)₂, Rh(I)COD(pyridine), Rh(I)COD(indenyl), and mixtures thereof, wherein COD represents a 1,5-cyclooctadiene group, BARF represents tetrakis(3,5-bis(trifluoromethyl)phenyl)borate, acac represents acetyl acetonate, and hfacac represents hexafluoro acetylacetonate.

The amount of starting material (C) used in step (1) of the method described above depends on various factors including the specific alkoxy-functional organohydrogensiloxane oligomer selected for starting material (A), the specific reactive hydrogen functional compound for starting material (B), and the temperature to which the mixture can be heated without boiling away (A) and (B). However, the amount of (C) the precious metal catalyst may be sufficient to provide a molar amount of the precious metal (e.g., rhodium metal) of 0 ppm to 100 ppm, alternatively 1 ppm to 100 ppm, alternatively 5 ppm to 80 ppm, alternatively 5 ppm to 20 ppm based on combined weights of starting materials (A) and (B). The method may optionally further comprise deactivation or removal of (C) the catalyst. However, with appropriate catalyst loading, the step of deactivation or removal of (C) the catalyst may be omitted.

Starting material (D) is an optional solvent may be added before or during step (1) of the method for making the alkoxy-functional organosiloxane oligomer. Without wishing to be bound by theory, the solvent may be added to facilitate introduction of certain starting materials, such as (C) the precious metal catalyst. Solvents that can be used herein are those that help fluidize the starting materials of the but essentially do not react with the starting materials. The solvent may be selected based on solubility the starting materials and volatility of the solvent. The solubility refers to the solvent being sufficient to dissolve and/or disperse a starting material. Volatility refers to vapor pressure of the solvent.

Suitable solvents include polyorganosiloxanes with suitable vapor pressures, such as hexamethyldisiloxane, octamethyltrisiloxane, hexamethylcyclotrisiloxane and other low molecular weight polyorganosiloxanes, such as 0.5 to 1.5 cSt DOWSIL^{™} 200 Fluids and DOWSIL^{™} OS FLUIDS, which are commercially available from DSC.

Alternatively, the solvent may comprise an organic solvent. The organic solvent can be an aromatic hydrocarbon such as benzene, toluene, ethylbenzene or xylene; an aliphatic hydrocarbon such as heptane, hexane, or octane; a halogenated hydrocarbon such as dichloromethane, 1,1,1-trichloroethane or methylene chloride; chloroform; or a combination thereof.

The amount of solvent will depend on various factors including the type of solvent selected and the amount and type of other starting materials selected for use in the method. However, the amount of solvent may range from 1 % to 99%, alternatively 2 % to 90 %, based on the weight of all starting materials in step (1). All or a portion of the solvent may optionally be removed after step (1).

The dehydrogenative silylation reaction in step (1) of the method described herein may be performed at RT, alternatively with heating. To improve rate of synthesis of the alkoxy-functional organosiloxane oligomer, temperature in step (1) may be 50 °C to 100 °C. The reaction may be performed at ambient pressure. The reaction may be performed under an inert atmosphere, such as nitrogen. Therefore, the method may further comprise purging a reactor with nitrogen before step (1). The reactor may be any convenient reactor, such as a batch vessel equipped with a jacket for heating and/or cooling and means to facilitate mixing such as baffles or an agitator. Alternatively, a reactor configured for continuous processing may be used.

The method described above may optionally further comprise recovering the alkoxy-functional organosiloxane oligomer having the reactive moiety, e.g., from the reaction mixture formed in step (1). Recovering may be performed by any convenient means, such as stripping and/or distillation with heating and optionally with reduced pressure.

The method described above produces a reaction product comprising an alkoxy-functional organosiloxane oligomer having a reactive moiety. The alkoxy-functional organosiloxane oligomer having the reactive moiety has formula: 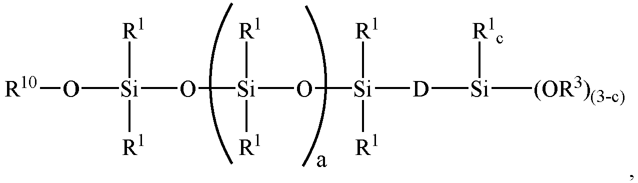 where R¹, D, R³, subscript a, and subscript c are as described above, and R¹⁰ is a reactive moiety selected from the group consisting of 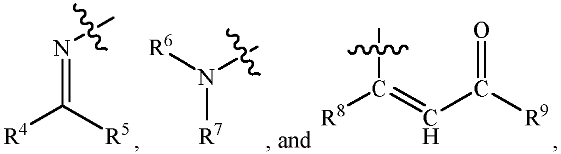 where R⁴, R⁵, R⁶, R⁷, R⁸ and R⁹ are as described above. One skilled in the art would recognize that the reactive moiety 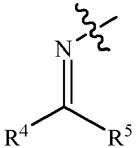 is derived from (B1) the oxime; the reactive moiety 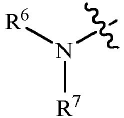 is derived from (B2) the hydroxylamine, and the reactive moiety 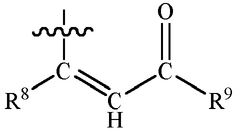 is derived from (B3) the enol.

The alkoxy-functional organosiloxane oligomer having the reactive moiety, described above, may be used in a method for preparing a polyalkoxy-functional polyorganosiloxane. The method for preparing the polyalkoxy-functional polyorganosiloxane comprises:
(I) practicing the method described above, thereby preparing the alkoxy-functional organosiloxane oligomer having the reactive moiety described above,
(II) combining starting materials comprising
   (a) the alkoxy-functional organosiloxane oligomer having the reactive moiety,
   (b) a polyorganosiloxane having, per molecule, an average of at least one silicon bonded hydroxyl (silanol) moiety, and
   optionally (c) a catalyst that will catalyze reaction of the reactive moiety from (a) the alkoxy-functional organosiloxane oligomer and the silanol moiety from (b) the polyorganosiloxane.

In the method for preparing the polyalkoxy-functional polyorganosiloxane, (b) the polyorganosiloxane may comprise unit formula:

(R¹¹₂R¹²SiO_{1/2})ₐₐ(R¹¹R¹²SiO_{2/2})_{bb}(R¹¹SiO_{3/2})_{cc}(HOSiO_{3/2})_{dd}(SiO_{4/2})ₑₑ,

where each R¹¹ is independently selected from the group consisting of a monovalent hydrocarbon group of 1 to 18 carbon atoms and a monovalent halogenated hydrocarbon group of 1 to 18 carbon atoms, each R¹² is independently selected from the group consisting of OH and R¹¹, subscripts aa, bb, cc, dd, and ee, represent average numbers of each unit, per molecule, in the unit formula and subscripts aa, bb, cc, dd, and ee have values such that aa ≥ 0, bb ≥ 0, cc ≥ 0, dd ≥ 0, ee ≥ 0, 10,000 ≥ (aa + bb + cc + dd + ee) ≥ 2, and with the proviso that when subscript dd = 0, then at least one R¹² is OH. The monovalent hydrocarbon group for R¹¹ may be as described above for R¹.

Alternatively, in the unit formula for (b) the polyorganosiloxane, when cc = dd = ee = 0, (b) the polyorganosiloxane may have formula: 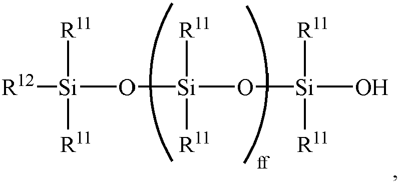 where each R¹¹ and R¹² are as described above, and subscript ff is an integer with an average value from 0 to 1,000. Suitable silanol functional polyorganosiloxanes for starting material (B) are known in the art and are commercially available. For example, bis-silanol-terminated polydimethylsiloxanes are commercially available from various sources, e.g., SILASTIC^{™} SFD-5 from DSC and DMS-S31 from Gelest, Inc. of Morrisville, Pennsylvania, USA. Other bis-silanol-terminated polydimethylsiloxanes are commercially available from vendors such as Fisher Scientific.

The method for making polyalkoxy-functional polyorganosiloxane may optionally include adding (c) a capping catalyst, i.e., a catalyst that will catalyze reaction of the reactive moiety from (a) the alkoxy-functional organosiloxane oligomer and the silanol moiety from (b) the polyorganosiloxane. The capping catalyst may be, for example, acetic acid or a halogenated derivative thereof, e.g., trifluoroacetic acid, a sulfonic acid such as dodecylbenzene sulfonic acid, triazabicyclodecene (TBD), 1,8-diazabicyclo[5.4.0]undec-7-ene (DBU), or 1,5-diazabicyclo[4.3.0]non-5-ene. Without wishing to be bound by theory, it is thought that capping catalyst may be eliminated to avoid potential for side reactions and that a benefit of the present invention is that the capping reaction proceeds even without (c) the capping catalyst. However, the capping catalyst may optionally be added when increasing the capping reaction speed is desired.

### EXAMPLES

These examples are intended to illustrate the invention to one skilled in the art and are not to be construed to limit the scope of the invention set forth in the claims. Starting materials used in these examples are described below in Table 1.

**Table 1 - Starting Materials**

| Name | Description | Source |
|---|---|---|
| A1 (ETM) | 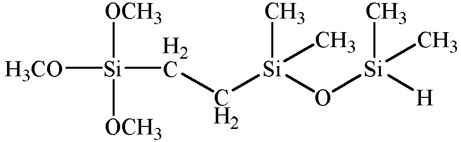 1,1,3,3-tetramethyl-1-(2-(trimethoxysilyl)ethyl)disiloxane | DSC |
| B1-1 acetone oxime | 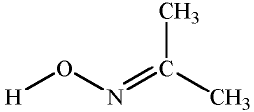 propan-2-one-oxime | Sigma-Aldrich |
| B2-1 diethylhydroxylamine | 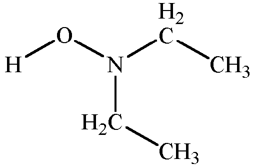 N,N-diethylhydroxylamine | Sigma-Aldrich |
| B3-1 acetyl acetone | 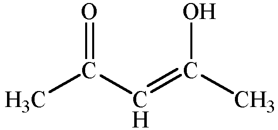 (Z)-4-hydroxypent-3-en-2-one | Sigma-Aldrich |
| C1 [Rh(COD)Cl]₂ | bis(rhodium cyclooctadiene chloride) | Strem |
| D1 | toluene | Fisher |
| b1 | Bis-hydroxyl-terminated polydimethylsiloxane with DP of 612, viscosity: 13500 cSt. | SFD-5 from DSC |

In this Example 1, a flask fit with a thermal couple, a condenser connected to N₂, and an addition funnel, was charged with ETM (20 g, 70.8mmol). A solution of acetone oxime (6.2 g, 84.8 mmol) in toluene (25 g) was added to the addition funnel. The system was purged with N₂ and heated to 70 °C. 2% acetone oxime was added upon stirring. A solution of [Rh(COD)Cl]₂ in toluene (0.566 mL, 25 mM, 0.02 mol%/SiH) was added and bubbling was observed. Acetone oxime was then slowly added to the reaction mixture over 40 min while the reaction temperature was kept at 70-75 °C. The yellow solution was stirred at 75 °C for additional 3 h after the addition of acetone oxime was complete and characterized by GC and found to have the formula shown below in Scheme 1.

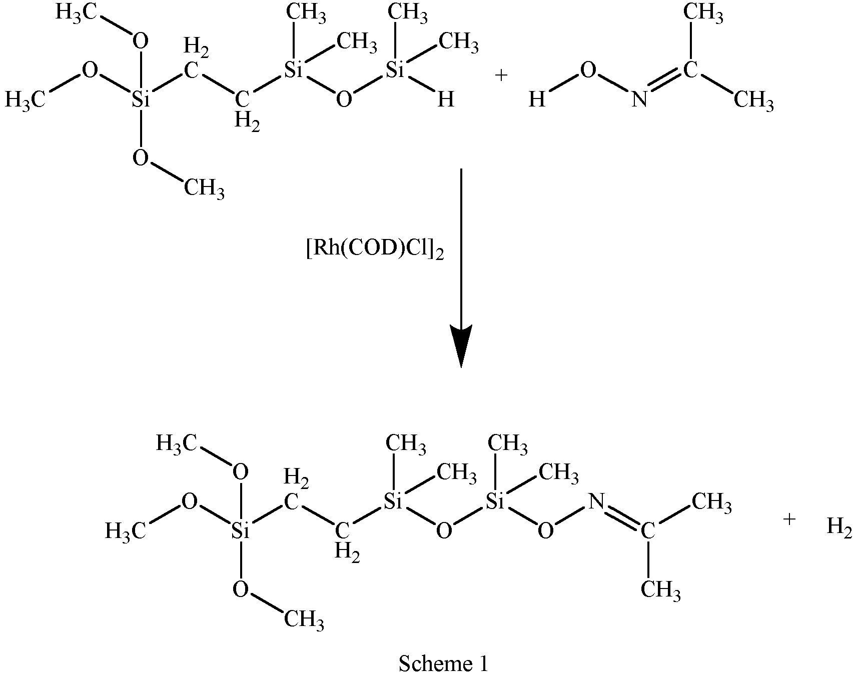

The crude product was then filtered and the filtrate was purified by distillation under 1 Torr. The product propan-2-one O-(1,1,3,3-tetramethyl-3-(2-(trimethoxysilyl)ethyl)disiloxaneyl) oxime was collected at 121-125 °C as overhead and characterized by GC/NMR and found to have a yield of 39% and purity of 91%.

The product propan-2-one O-(1,1,3,3-tetramethyl-3-(2-(trimethoxysilyl)ethyl)disiloxaneyl) oxime was combined with a bis-hydroxyl-terminated polydimethylsiloxane at 50 °C. A capping reaction was observed. Without wishing to be bound by theory, it is thought that increasing temperature and/or reaction time and/or adding a catalyst would improve yield of the resulting capped polymer.

In this Example 2, a flask fit with a thermal couple, a condenser connected to N₂, and an addition funnel, was charged with ETM (20 g, 70.8mmol). Diethylhydroxylamine (7.6 g, 85.3 mmol) was added to the addition funnel. The system was purged with N₂ and heated to 78 °C. 2% diethylhydroxylamine was added upon stirring. A solution of [Rh(COD)Cl]₂ in toluene (0.566 mL, 25 mM, 0.02 mol%/SiH) was added and slow bubbling was observed. Diethylhydroxylamine was then slowly added to the reaction mixture over 35 min while the reaction temperature was kept at 70-78 °C. The yellow solution was stirred at 78 °C for additional 2 h, filtered, and characterized by GC. Low boilers were removed under 0.1 Torr at 59-109 °C of overhead. The bottoms were collected and characterized by GC. The product N,N-diethyl-O-(1,1,3,3-tetramethyl-3-(2-(trimethoxysilyl)ethyl)disiloxaneyl)hydroxylamine, shown below in scheme 2, (8.9 g) was found to have a yield of 34% and purity of 64%.

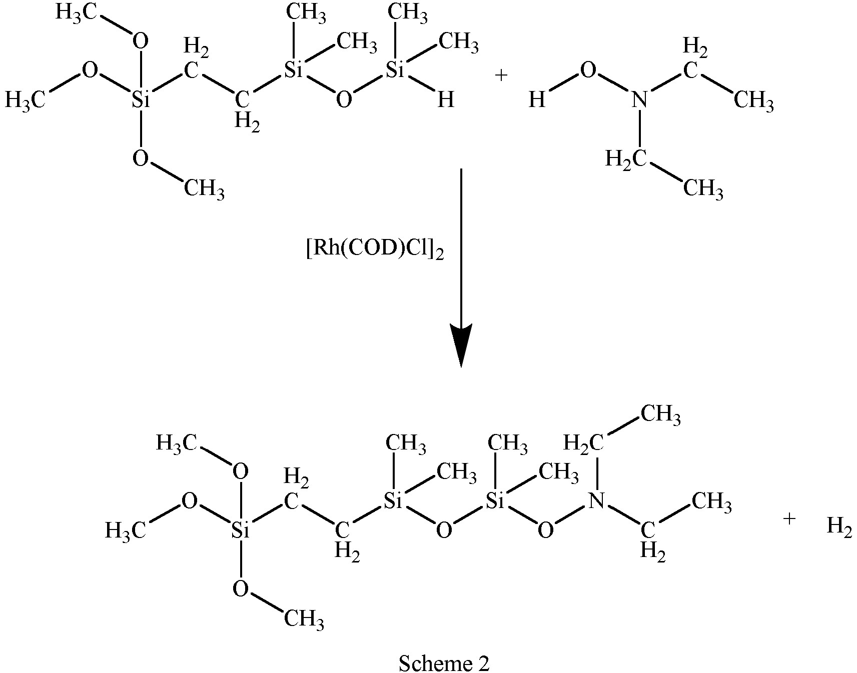

The product N,N-diethyl-O-(1,1,3,3-tetramethyl-3-(2-(trimethoxysilyl)ethyl)disiloxaneyl)hydroxylamine was combined with a bis-hydroxyl-terminated polydimethylsiloxane at 50 °C, and 49% of the hydroxyl groups were capped. Without wishing to be bound by theory, it is thought that increasing temperature and/or reaction time and/or adding a catalyst would improve yield of the resulting capped polymer.

In this Example 3, A flask fit with a thermal couple, a condenser connected to N₂, and an addition funnel, was charged with ETM (20 g, 70.8mmol). Acetylacetone (8.5 g, 84.9 mmol) was added to the addition funnel. The system was purged with N₂ and heated to 70 °C. 2% acetylacetone was added upon stirring. A solution of [Rh(COD)Cl]₂ in toluene (0.566 mL, 25 mM, 0.02 mol%/SiH) was added and very slow bubbling was observed. The reaction temperature was raised to 100 °C and acetylacetone was then slowly added to the reaction mixture over 45 min. After addition, the reaction mixture stirred at 100 °C under N₂ for another 30 min until bubbling stopped and analyzed by GC, which confirmed the presence of the product (Z)-3,3-dimethoxy-6,6,8,8,10-pentamethyl-2,7,9-trioxa-3,6,8-trisilatridec-10-en-12-one, as illustrated below in Scheme 3.

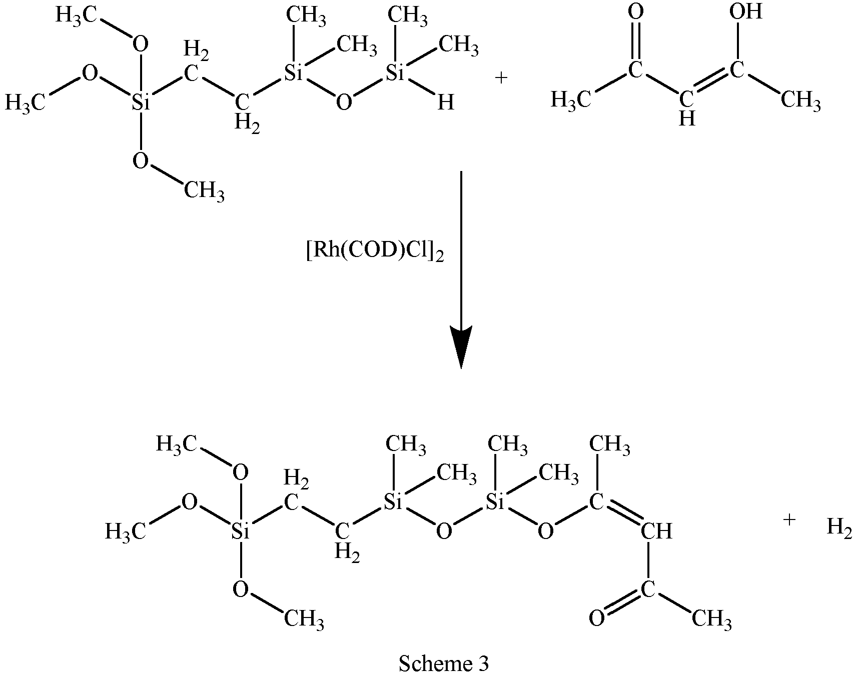

In this Example 4, N,N-diethyl-O-(1,1,3,3-tetramethyl-3-(2-(trimethoxysilyl)ethyl)disiloxaneyl)hydroxylamine was synthesized as follows. To a 20 mL glass vial were added ETM (2.78 g, 9.84 mmol) and diethylhydroxylamine (991 µL, 877 mg, 9.84 mmol), and this mixture was stirred at RT for 24 hours. Analysis by GC-MS showed that the mixture at this point was composed of mainly the product N,N-diethyl-O-(1,1,3,3-tetramethyl-3-(2-(trimethoxysilyl)ethyl)disiloxaneyl)hydroxylamine (ca. 60%) together with a small quantity of unreacted ETM (ca. 15%) and several other side products (total ca. 25%). This example 4 demonstrates that the dehydrogenative silylation reaction can proceed without the presence of a precious metal catalyst.

### INDUSTRIAL APPLICABILITY

Problems to be addressed: There is a need in the organosilicon industry for polyalkoxy-functional polyorganosiloxanes. A method for producing them that uses silanol-functional polyorganosiloxane starting materials is desirable because the silanol-functional polyorganosiloxanes typically have lower cost and better availability than alkenyl-functional polyorganosiloxanes used as starting materials for functionalizing alkenyl-functional polyorganosiloxanes in, e.g., PCT Patent Application Publication WO2021/050325 to Zhou, et al. (83123), PCT Patent Application Publication WO2021/050326 to Zhou, et al. (83124), U.S. Patent 11,098,163 to Gohndrone, et al. (80056), U.S. Patent 10,968,317 to Gohndrone, et al. (80757), and U.S. Patent Application Publication 2020-0231755 to Gohndrone, et al. (80758).

Solution: The present invention provides an alkoxy-functional organosilicon oligomer with a reactive moiety. The reactive moiety will react with silanol groups of silanol-functional polyorganosiloxanes to cap the silanol and produce a poly-alkoxy-functional polyorganosiloxane.

### Definitions and Usage of Terms

All amounts, ratios, and percentages herein are by weight, unless otherwise indicated. The transitional phrases "comprising", "consisting essentially of", and "consisting of" are used as described in the Manual of Patent Examining Procedure Ninth Edition, Revision 08.2017, Last Revised January 2018 at section §2111.03 I., II., and III. The abbreviations used herein have the definitions in Table 2.

**Table 2 - Abbreviations**

| Abbreviation | Definitions |
|---|---|
| acac | acetyl acetonate |
| °C | degrees Celsius |
| g | gram |
| GC | gas chromatography |
| h | hour |
| Me | methyl |
| mg | milligram |
| min | minute |
| mL | milliliter |
| mm | millimeter |
| mmol | millimole |
| mPa·s | milliPascal seconds |
| NMR | nuclear magnetic resonance |
| RT | room temperature of 25 ± 5 °C |
| THF | tetrahydrofuran |
| µL | microliter |
| µm | micrometer |
| ppm | parts per million by weight |

### Embodiments of the Invention

In a first embodiment, a method for making an alkoxy-functional organosiloxane oligomer comprises:
(1) combining, under conditions for dehydrogenative silylation reaction, starting materials comprising
   (A) an alkoxy-functional organohydrogensiloxane oligomer of formula 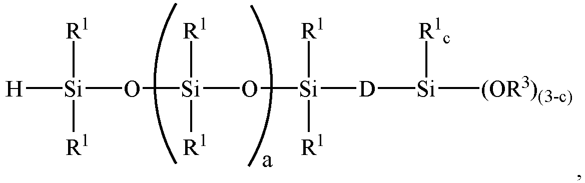 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, and subscript c is 0 or 1;
   (B) a reactive hydrogen functional compound of formula 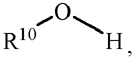 where R¹⁰ is selected from the group consisting of 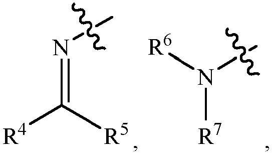 and 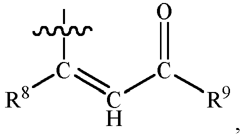 where R⁴, R⁵, R⁶, R⁷, R⁸, and R⁹ are each independently selected from the group consisting of a monovalent hydrocarbon group of 1 to 18 carbon atoms and a monovalent halogenated hydrocarbon group of 1 to 18 carbon atoms;
      optionally (C) a rhodium complex catalyst; and
      optionally (D) a solvent.

In a second embodiment, in the method of the first embodiment, in (A) the alkoxy-functional organohydrogensiloxane oligomer, each R¹ is an alkyl group, D is an alkylene group, subscript a is 0 or 1, and subscript c is 0.

In a third embodiment, in the method of the second embodiment, each R¹ is methyl, each D is -(C₂H₄)-, and subscript a is 0.

In a fourth embodiment, in the method of any one of the first to third embodiments, (B) the reactive hydrogen functional compound comprises (B1) an oxime of formula 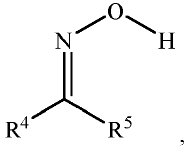 where R⁴ and R⁵ are each independently selected alkyl groups of 1 to 6 carbon atoms.

In a fifth embodiment, in the method of the fourth embodiment, each R⁴ and each R⁵ are methyl.

In a sixth embodiment, in the method of any one of the first to third embodiments, (B) the reactive hydrogen functional compound comprises (B2) a hydroxylamine of formula 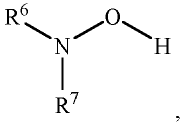 where R⁶ and R⁷ are each independently selected alkyl groups of 1 to 6 carbon atoms.

In a seventh embodiment, in the method of the sixth embodiment, R⁶ and R⁷ are each ethyl.

In an eighth embodiment, in the method of any one of the first to third embodiments, (B) the reactive hydrogen functional compound comprises (B3) an enol of formula 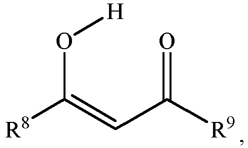 where R⁸ and R⁹ are each independently selected alkyl groups of 1 to 6 carbon atoms.

In a ninth embodiment, in the method of the eighth embodiment, R⁸ and R⁹ are each methyl.

In a tenth embodiment, in the method of any one of the first to ninth embodiments, (A) the alkoxy-functional organohydrogensiloxane oligomer and (B, the reactive hydrogen functional compound, are used in amounts sufficient to provide a molar ratio of the reactive hydrogen functionality of (B) to the silyl hydride functionality of (A) [(B):(A) ratio] of 1:1 to 5:1.

In an eleventh embodiment, in the method of the tenth embodiment, (B):(A) ratio is 1:1 to 2:1

In a twelfth embodiment, in the method of any one of the first to eleventh embodiments, (C) the rhodium complex catalyst is present.

In a thirteenth embodiment, in the method of the twelfth embodiment, the rhodium complex catalyst has formula [Rh(R¹³)ₓ(R¹⁴)_{y}]_{z}, where subscript x is 1 or 2, R¹³ is a 1,5-cyclooctadiene ligand or a 2,5-norbornadiene ligand, subscript y is 0, 1 or 2, R¹⁴ is a ligand that can be activated at a temperature less than a boiling point of (A) the alkoxy-functional organohydrogensiloxane oligomer, and subscript z is 1 or 2.

In a fourteenth embodiment, in the method of the thirteenth embodiment, R¹³ is a 1,5-cyclooctadiene ligand.

In a fifteenth embodiment, in the method of the fourteenth embodiment, R¹³ is 1,5-cyclooctadiene, R¹⁴ is Cl, subscript x = 1, subscript y = 1, and subscript z = 2.

In a sixteenth embodiment, the method further comprises comprising (2) recovering the alkoxy-functional organosiloxane oligomer having the reactive moiety.

In a seventeenth embodiment, the method of any one of the first to sixteenth embodiments produces the alkoxy-functional organosiloxane oligomer, and the alkoxy-functional organosiloxane oligomer has formula: 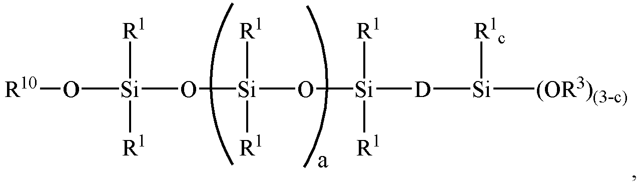 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, subscript c is 0 or 1, and R¹⁰ is a reactive moiety selected from the group consisting of 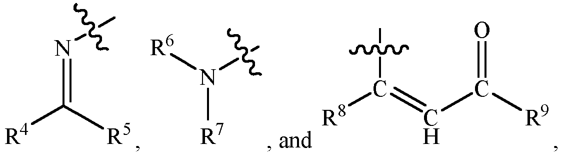 where R⁴, R⁵, R⁶, R⁷, R⁸ and R⁹ are each independently selected from the group consisting of a monovalent hydrocarbon group of 1 to 18 carbon atoms and a monovalent halogenated hydrocarbon group of 1 to 18 carbon atoms.

In an eighteenth embodiment, in the method of the seventeenth embodiment the formula for the alkoxy-functional organosiloxane oligomer has each R¹ is an alkyl group, D is an alkylene group, subscript a is 0 or 1, subscript c is 0, and R⁴, R⁵, R⁶, R⁷, R⁸ and R⁹ are each independently selected alkyl groups of 1 to 6 caron atoms.

In a nineteenth embodiment, in the method of the eighteenth embodiment, the formula for the alkoxy-functional organosiloxane oligomer has each R¹ is methyl; each D is - (C₂H₄)-; subscript a is 0; R⁴, R⁵, R⁸, and R⁹ are each methyl; and R⁶ and R⁷ are each ethyl.

In a twentieth embodiment, a method for preparing a polyalkoxy-functional polyorganosiloxane comprises:
(I) preparing an alkoxy-functional organosiloxane oligomer having a reactive moiety by a method comprising
   (1) combining, under conditions for dehydrogenative silylation reaction, starting materials comprising
      (A) an alkoxy-functional organohydrogensiloxane oligomer of formula 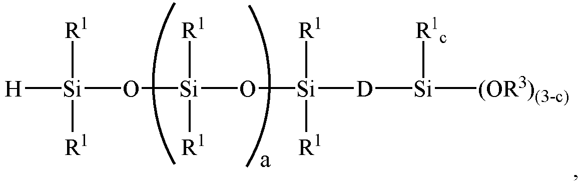 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, and subscript c is 0 or 1;
      (B) a reactive hydrogen functional compound of formula 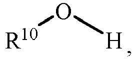 where R¹⁰ is selected from the group consisting of 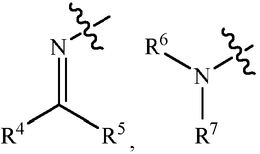 , and 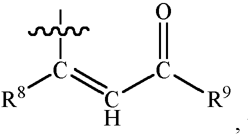 where R⁴, R⁵, R⁶, R⁷, R⁸, and R⁹ are each independently selected from the group consisting of a monovalent hydrocarbon group of 1 to 18 carbon atoms and a monovalent halogenated hydrocarbon group of 1 to 18 carbon atoms;
         optionally (C) a rhodium complex catalyst; and
         optionally (D) a solvent; and
(II) combining starting materials comprising
   (a) the alkoxy-functional organosiloxane oligomer having the reactive moiety,
   (b) a polyorganosiloxane having, per molecule, an average of at least one silicon bonded hydroxyl (silanol) moiety, and
   optionally (c) a catalyst that will catalyze reaction of the reactive moiety from (a) the alkoxy-functional organosiloxane oligomer and the silanol moiety from (b) the polyorganosiloxane.

In a twenty-first embodiment, in the method of the twentieth embodiment, (b) the polyorganosiloxane has unit formula:

(R¹¹₂R¹²SiO_{1/2})ₐₐ(R¹¹R¹²SiO_{2/2})_{bb}(R¹¹SiO_{3/2})_{cc}(HOSiO_{3/2})_{dd}(SiO_{4/2})ₑₑ,

where each R¹¹ is independently selected from the group consisting of a monovalent hydrocarbon group of 1 to 18 carbon atoms and a monovalent halogenated hydrocarbon group of 1 to 18 carbon atoms, each R¹² is independently selected from the group consisting of OH and R¹¹, subscripts aa, bb, cc, dd, and ee, represent average numbers of each unit, per molecule, in the unit formula and subscripts aa, bb, cc, dd, and ee have values such that aa ≥ 0, bb ≥ 0, cc ≥ 0, dd ≥ 0, ee ≥ 0, 10,000 ≥ (aa + bb + cc + dd + ee) ≥ 2, and with the proviso that when subscript dd = 0, then at least one R¹² is OH.

In a twenty-second embodiment, in the method of the twenty first embodiment, cc = dd = ee = 0, and (b) the polyorganosiloxane has formula: 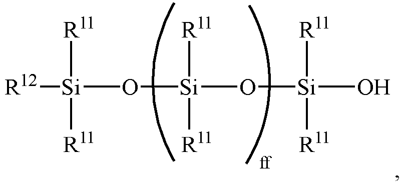 where each R¹¹ and R¹² are as described above, and subscript ff is an integer with an average value from 0 to 1,000.

In a twenty-third embodiment, in the method of any one of the twentieth to twenty-second embodiments, where step (II) further comprises adding (c) a capping catalyst.

## Claims

1. (original) An alkoxy-functional organosiloxane oligomer of formula: 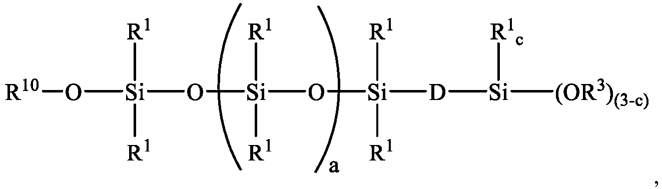 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, subscript c is 0 or 1, and R¹⁰ is a reactive moiety selected from the group consisting of 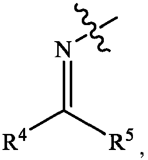 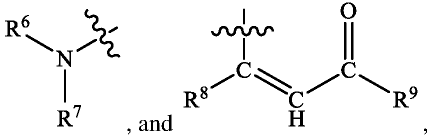 where R⁴, R⁵, R⁶, R⁷, R⁸ and R⁹ are each independently selected from the group consisting of a monovalent hydrocarbon group of 1 to 18 carbon atoms and a monovalent halogenated hydrocarbon group of 1 to 18 carbon atoms.

2. (original) The oligomer of claim 1, where each R¹ is an alkyl group, D is an alkylene group, subscript a is 0 or 1, subscript c is 0, and R⁴, R⁵, R⁶, R⁷, R⁸ and R⁹ are each independently selected alkyl groups of 1 to 6 caron atoms.

3. (original) The oligomer of claim 2, where each R¹ is methyl; each D is -(C₂H₄)-; subscript a is 0; R⁴, R⁵, R⁸, and R⁹ are each methyl; and R⁶ and R⁷ are each ethyl.

4. (original) A method for making the alkoxy-functional organosiloxane oligomer of any one of claims 1 to 3, wherein the method comprises:
(1) combining, under conditions for dehydrogenative silylation reaction, starting materials comprising
(A) an alkoxy-functional organohydrogensiloxane oligomer of formula 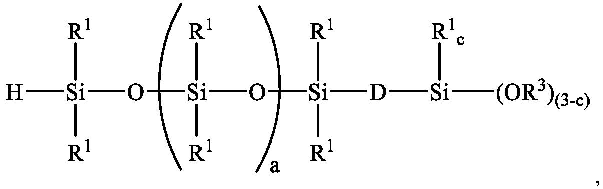 where each R¹ is independently selected from the group consisting of a monovalent hydrocarbon group of 1 to 18 carbon atoms and a monovalent halogenated hydrocarbon group of 1 to 18 carbon atoms, D is a divalent hydrocarbon group of 2 to 18 carbon atoms, subscript a is an integer up to 20, and subscript c is 0 or 1;
(B) a reactive hydrogen functional compound of formula 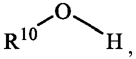 where R¹⁰ is selected from the group consisting of 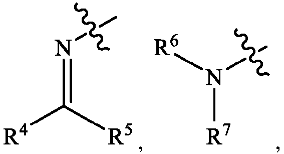 and 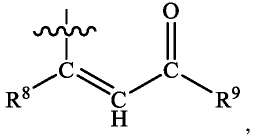 where R⁴, R⁵, R⁶, R⁷, R⁸, and R⁹ are each independently selected from the group consisting of a monovalent hydrocarbon group of 1 to 18 carbon atoms and a monovalent halogenated hydrocarbon group of 1 to 18 carbon atoms;
optionally (C) a precious metal catalyst; and
optionally (D) a solvent.

5. (original) The method of claim 4, where in (A) the alkoxy-functional organohydrogensiloxane oligomer, each R¹ is an alkyl group, D is an alkylene group, subscript a is 0 or 1, and subscript c is 0.

6. (original) The method of claim 5, where each R¹ is methyl, each D is -(C₂H₄)-, and subscript a is 0.

7. (original) The method of any one of claims 4 to 6, where (B) the reactive hydrogen functional compound comprises (B1) an oxime of formula 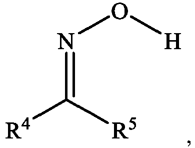 where R⁴ and R⁵ are each independently selected alkyl groups of 1 to 6 carbon atoms.

8. (original) The method of any one of claims 4 to 6, where (B) reactive hydrogen functional compound comprises (B2) a hydroxylamine of formula 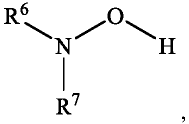 where R⁶ and R⁷ are each independently selected alkyl groups of 1 to 6 carbon atoms.

9. (original) The method of any one of claims 4 to 6, where (B) the reactive hydrogen functional compound comprises (B3) an enol of formula 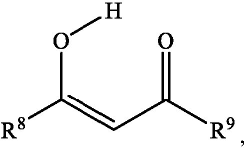 where R⁸ and R⁹ are each independently selected alkyl groups of 1 to 6 carbon atoms.

10. (original) The method of any one of claims 4 to 9, where (C) the precious metal catalyst is present, and the precious metal catalyst comprises a rhodium complex of formula [Rh(R¹³)ₓ(R¹⁴)_{y}]_{z}, where subscript x is 1 or 2, R¹³ is a 1,5-cyclooctadiene ligand or a 2,5-norbornadiene ligand, subscript y is 0, 1 or 2, R¹⁴ is a ligand that can be activated at a temperature less than a boiling point of (A) the alkoxy-functional organohydrogensiloxane oligomer, and subscript z is 1 or 2.

11. (original) The method of claim 10, where R¹³ is 1,5-cyclooctadiene, R¹⁴ is Cl, subscript x = 1, subscript y = 1, and subscript z = 2.

12. (original) The method of any one of claims 4 to 11, further comprising (2) recovering the alkoxy-functional organosiloxane oligomer having the reactive moiety.

13. (original) A method for preparing a polyalkoxy-functional polyorganosiloxane, the method comprising:
(I) practicing the method of any one of claims 4 to 12, thereby preparing the alkoxy-functional organosiloxane oligomer having the reactive moiety,
(II) combining starting materials comprising
(a) the alkoxy-functional organosiloxane oligomer having the reactive moiety,
(b) a polyorganosiloxane having, per molecule, an average of at least one silicon bonded hydroxyl (silanol) moiety, and
optionally (c) a catalyst that will catalyze reaction of the reactive moiety from (a) the alkoxy-functional organosiloxane oligomer and the silanol moiety from (b) the polyorganosiloxane.

14. (original) The method of claim 13, where (b) the polyorganosiloxane has unit formula:
(R¹¹₂R¹²SiO_{1/2})ₐₐ(R¹¹R¹²SiO_{2/2})_{bb}(R¹¹SiO_{3/2})_{cc}(HOSiO_{3/2})_{dd}(SiO_{4/2})ₑₑ, where each R¹¹ is independently selected from the group consisting of a monovalent hydrocarbon group of 1 to 18 carbon atoms and a monovalent halogenated hydrocarbon group of 1 to 18 carbon atoms, each R¹² is independently selected from the group consisting of OH and R¹¹, subscripts aa, bb, cc, dd, and ee, represent average numbers of each unit, per molecule, in the unit formula and subscripts aa, bb, cc, dd, and ee have values such that aa ≥ 0, bb ≥ 0, cc ≥ 0, dd ≥ 0, ee ≥ 0, 10,000 ≥ (aa + bb + cc + dd + ee) ≥ 2, and with the proviso that when subscript dd = 0, then at least one R¹² is OH.

15. (original) The method of claim 14, where cc = dd = ee = 0, and (b) the polyorganosiloxane has formula: 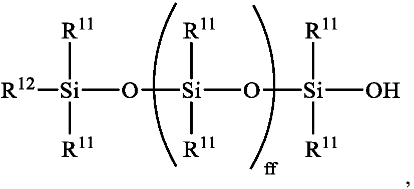 where each R¹¹ and R¹² are as described above, and subscript ff is an integer with an average value from 0 to 1,000.

16. (new) The method of claim 4, where (C) the precious metal catalyst is present.

## Patentansprüche

1. (Original) Alkoxyfunktionelles Organosiloxanoligomer der Formel: 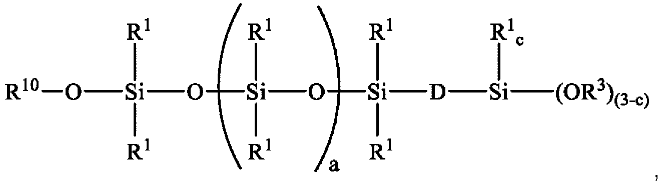 wobei die R¹ jeweils unabhängig voneinander aus der Gruppe, bestehend aus einer einwertigen Kohlenwasserstoffgruppe mit 1 bis 18 Kohlenstoffatomen und einer einwertigen halogenierten Kohlenwasserstoffgruppe mit 1 bis 18 Kohlenstoffatomen ausgewählt sind, D eine zweiwertige Kohlenwasserstoffgruppe mit 2 bis 18 Kohlenstoffatomen ist, Index a eine ganze Zahl bis 20 ist, Index c 0 oder 1 ist und R¹⁰ eine reaktive Einheit ist, die aus der Gruppe ausgewählt ist, bestehend aus 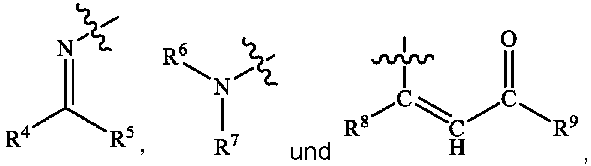 wobei R⁴, R⁵, R⁶, R⁷, R⁸ und R⁹ jeweils unabhängig voneinander aus der Gruppe, bestehend aus einer einwertigen Kohlenwasserstoffgruppe mit 1 bis 18 Kohlenstoffatomen und einer einwertigen halogenierten Kohlenwasserstoffgruppe mit 1 bis 18 Kohlenstoffatomen, ausgewählt sind.

2. (Original) Oligomer nach Anspruch 1, wobei jedes R¹ eine Alkylgruppe ist, D eine Alkylengruppe ist, Index a 0 oder 1 ist, Index c 0 ist und R⁴, R⁵, R⁶, R⁷, R⁸ und R⁹ jeweils unabhängig voneinander ausgewählte Alkylgruppen mit 1 bis 6 Kohlenstoffatomen sind.

3. (Original) Oligomer nach Anspruch 2, wobei jedes R¹ Methyl ist; jedes D -(C₂H₄)- ist; Index a 0 ist; R⁴, R⁵, R⁸ und R⁹ jeweils Methyl sind; und R⁶ und R⁷ jeweils Ethyl sind.

4. (Original) Verfahren zum Herstellen des alkoxyfunktionellen Organosiloxanoligomers nach einem der Ansprüche 1 bis 3, wobei das Verfahren umfasst:
(1) unter Bedingungen, die eine dehydrierende Silylierungsreaktion bewirken, Kombinieren von Ausgangsmaterialien, umfassend
(A) ein alkoxyfunktionelles Organohydrogensiloxanoligomer der Formel 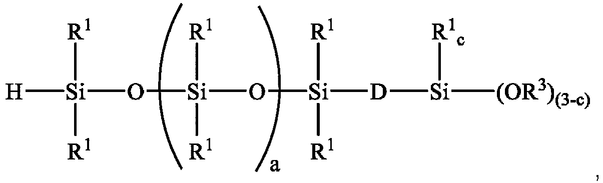 wobei die R¹ jeweils unabhängig voneinander aus der Gruppe, bestehend aus einer einwertigen Kohlenwasserstoffgruppe mit 1 bis 18 Kohlenstoffatomen und einer einwertigen halogenierten Kohlenwasserstoffgruppe mit 1 bis 18 Kohlenstoffatomen, ausgewählt sind, D eine zweiwertige Kohlenwasserstoffgruppe mit 2 bis 18 Kohlenstoffatomen ist, Index a eine ganze Zahl bis 20 ist und Index c 0 oder 1 ist,
(B) eine reaktive wasserstofffunktionelle Verbindung der Formel 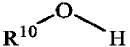 ist, wobei R¹⁰ aus der Gruppe bestehend aus 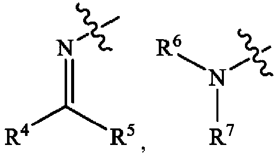 und 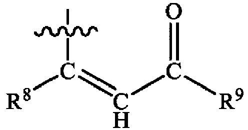 ausgewählt ist, wobei R⁴, R⁵, R⁶, R⁷, R⁸ und R⁹ jeweils unabhängig voneinander aus der Gruppe, bestehend aus einer einwertigen Kohlenwasserstoffgruppe mit 1 bis 18 Kohlenstoffatomen und einer einwertigen halogenierten Kohlenwasserstoffgruppe mit 1 bis 18 Kohlenstoffatomen ausgewählt sind;
optional (C) einen Edelmetallkatalysator; und
optional (D) ein Lösungsmittel.

5. (Original) Verfahren nach Anspruch 4, wobei in (A) dem alkoxyfunktionellen Organohydrogensiloxanoligomer jedes R¹ eine Alkylgruppe ist, D eine Alkylengruppe ist, Index a 0 oder 1 ist und Index c 0 ist.

6. (Original) Verfahren nach Anspruch 5, wobei jedes R¹ Methyl ist, jedes D -(C₂H₄)- ist und Index a 0 ist.

7. (Original) Verfahren nach einem der Ansprüche 4 bis 6, wobei (B) die reaktive wasserstofffunktionelle Verbindung (B1) ein Oxim der Formel 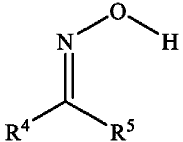 umfasst, wobei R⁴ und R⁵ jeweils unabhängig voneinander ausgewählte Alkylgruppen mit 1 bis 6 Kohlenstoffatomen sind.

8. (Original) Verfahren nach einem der Ansprüche 4 bis 6, wobei (B) die reaktive wasserstofffunktionelle Verbindung (B2) ein Hydroxylamin der Formel 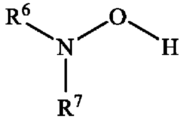 umfasst, wobei R⁶ und R⁷ jeweils unabhängig voneinander ausgewählte Alkylgruppen mit 1 bis 6 Kohlenstoffatomen sind.

9. (Original) Verfahren nach einem der Ansprüche 4 bis 6, wobei (B) die reaktive wasserstofffunktionelle Verbindung (B3) ein Enol der Formel 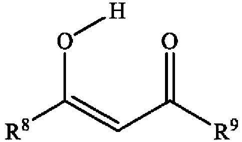 umfasst, wobei R⁸ und R⁹ jeweils unabhängig voneinander ausgewählte Alkylgruppen mit 1 bis 6 Kohlenstoffatomen sind.

10. (Original) Verfahren nach einem der Ansprüche 4 bis 9, wobei (C) der Edelmetallkatalysator vorliegt und der Edelmetallkatalysator einen Rhodiumkomplex der Formel [Rh(R¹³)ₓ(R¹⁴)_{y}]_{z} umfasst, wobei Index x 1 oder 2 ist, R¹³ ein 1,5-Cyclooctadienligand oder ein 2,5-Norbornadienligand ist, Index y 0, 1 oder 2 ist, R¹⁴ ein Ligand ist, der bei einer Temperatur unterhalb des Siedepunkts (A) des alkoxyfunktionellen Organohydrogensiloxanoligomers aktiviert werden kann, und Index z 1 oder 2 ist.

11. (Original) Verfahren nach Anspruch 10, wobei R¹³ 1,5-Cyclooctadien ist, R¹⁴ Cl ist, Index x = 1, Index y = 1 und Index z = 2.

12. (Original) Verfahren nach einem der Ansprüche 4 bis 11, ferner umfassend (2) das Gewinnen des alkoxyfunktionellen Organosiloxanoligomers mit der reaktiven Einheit.

13. (Original) Verfahren zum Herstellen eines polyalkoxyfunktionellen Polyorganosiloxans, wobei das Verfahren umfasst:
(I) Durchführen des Verfahrens nach einem der Ansprüche 4 bis 12, wodurch das alkoxyfunktionelle Organosiloxanoligomer mit der reaktiven Einheit hergestellt wird,
(II) Kombinieren von Ausgangsmaterialien, umfassend
(a) das alkoxyfunktionelle Organosiloxanoligomer mit der reaktiven Einheit,
(b) ein Polyorganosiloxan mit durchschnittlich mindestens einer siliciumgebundenen Hydroxylgruppe (Silanolgruppe) pro Molekül und
optional (c) einen Katalysator, der die Reaktion der reaktiven Einheit von (a) dem alkoxyfunktionellen Organosiloxanoligomer und der Silanoleinheit von (b) dem Polyorganosiloxan katalysiert.

14. (Original) Verfahren nach Anspruch 13, wobei (b) das Polyorganosiloxan die Einheitsformel:
(R¹¹₂R¹²SiO_{1/2})ₐₐ(R¹¹R¹²SiO_{2/2})_{bb}(R¹¹SiO_{3/2})_{cc}(HOSiO_{3/2})_{dd}(SiO_{4/2})ₑₑ aufweist, wobei die R¹¹ jeweils unabhängig voneinander aus der Gruppe, bestehend aus einer einwertigen Kohlenwasserstoffgruppe mit 1 bis 18 Kohlenstoffatomen und einer einwertigen halogenierten Kohlenwasserstoffgruppe mit 1 bis 18 Kohlenstoffatomen, ausgewählt sind, wobei die R¹² jeweils unabhängig voneinander aus der Gruppe, bestehend aus OH und R¹¹, ausgewählt sind, Indizes aa, bb, cc, dd und ee die durchschnittlichen Anzahlen jeder Einheit pro Molekül in der Einheitsformel darstellen und Indizes aa, bb, cc, dd und ee solche Werte aufweisen, dass aa ≥ 0, bb ≥ 0, cc ≥ 0, dd ≥ 0, ee ≥ 0, 10,000 ≥ (aa + bb + cc + dd + ee) ≥ 2 gilt, und mit der Maßgabe, dass, wenn Index dd = 0, mindestens ein R¹² OH ist.

15. (Original) Verfahren nach Anspruch 14, wobei cc = dd = ee = 0, und (b) das Polyorganosiloxan die Formel: 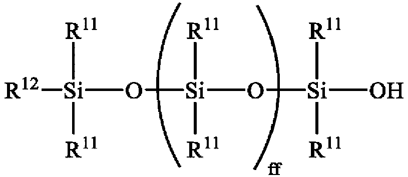 aufweist, wobei die R¹¹ und R¹² jeweils wie oben beschrieben sind und Index ff eine ganze Zahl mit einem Durchschnittswert von 0 bis 1.000 ist.

16. (Neu) Verfahren nach Anspruch 4, wobei (C) der Edelmetallkatalysator vorliegt.

## Revendications

1. Oligomère d'organosiloxane à fonctionnalité alcoxy de formule : 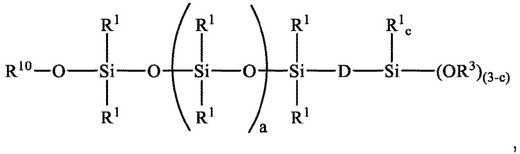 où chaque R¹ est choisi indépendamment dans le groupe constitué d'un groupe hydrocarboné monovalent de 1 à 18 atomes de carbone et d'un groupe hydrocarboné halogéné monovalent de 1 à 18 atomes de carbone, D est un groupe hydrocarboné divalent de 2 à 18 atomes de carbone, l'indice a est un nombre entier allant jusqu'à 20, l'indice c vaut 0 ou 1, et R¹⁰ est un groupement réactif choisi dans le groupe constitué de 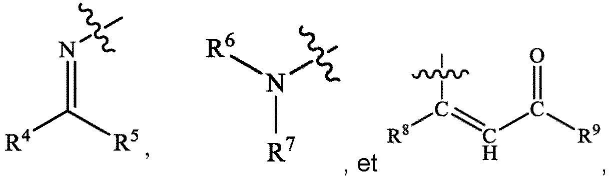 où R⁴, R⁵, R⁶, R⁷, R⁸ et R⁹ sont chacun choisis indépendamment dans le groupe constitué d'un groupe hydrocarboné monovalent de 1 à 18 atomes de carbone et d'un groupe hydrocarboné halogéné monovalent de 1 à 18 atomes de carbone.

2. Oligomère selon la revendication 1, où chaque R¹ est un groupe alkyle, D est un groupe alkylène, l'indice a vaut 0 ou 1, l'indice c vaut 0, et R⁴, R⁵, R⁶, R⁷, R⁸ et R⁹ sont chacun des groupes alkyle de 1 à 6 atomes de carbone choisis indépendamment.

3. Oligomère selon la revendication 2, où chaque R¹ est méthyle ; chaque D est -(C₂H₄)- ; l'indice a vaut 0 ; R⁴, R⁵, R⁸, et R⁹ sont chacun méthyle ; et R⁶ et R⁷ sont chacun éthyle.

4. Procédé de fabrication de l'oligomère d'organosiloxane à fonctionnalité alcoxy selon l'une quelconque des revendications 1 à 3, dans lequel le procédé comprend :
(1) la combinaison, dans des conditions de réaction de silylation par déshydrogénation, de matières premières comprenant
(A) un oligomère d'organohydrogénosiloxane à fonctionnalité alcoxy de formule 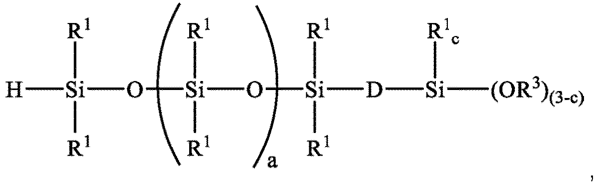 où chaque R¹ est choisi indépendamment dans le groupe constitué d'un groupe hydrocarboné monovalent de 1 à 18 atomes de carbone et d'un groupe hydrocarboné halogéné monovalent de 1 à 18 atomes de carbone, D est un groupe hydrocarboné divalent de 2 à 18 atomes de carbone, l'indice a est un nombre entier allant jusqu'à 20, et l'indice c vaut 0 ou 1 ;
(B) un composé réactif à fonctionnalité hydrogène de formule 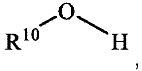 où R¹⁰ est choisi dans le groupe constitué de 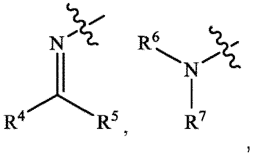 et 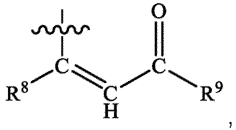 où R⁴, R⁵, R⁶, R⁷, R⁸, et R⁹ sont chacun choisis indépendamment dans le groupe constitué d'un groupe hydrocarboné monovalent de 1 à 18 atomes de carbone et d'un groupe hydrocarboné halogéné monovalent de 1 à 18 atomes de carbone ;
facultativement (C) un catalyseur de métal précieux ; et
facultativement (D) un solvant.

5. Procédé selon la revendication 4, où, dans (A) l'oligomère d'organohydrogénosiloxane à fonctionnalité alcoxy, chaque R¹ est un groupe alkyle, D est un groupe alkylène, l'indice a vaut 0 ou 1, et l'indice c vaut 0.

6. Procédé selon la revendication 5, où chaque R¹ est méthyle, chaque D est -(C₂H₄)-, et l'indice a vaut 0.

7. Procédé selon l'une quelconque des revendications 4 à 6, où (B) le composé réactif à fonctionnalité hydrogène comprend (B1) un oxime de formule 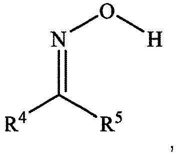 où R⁴ et R⁵ sont chacun des groupes alkyle de 1 à 6 atomes de carbone choisis indépendamment.

8. Procédé selon l'une quelconque des revendications 4 à 6, où (B) le composé réactif à fonctionnalité hydrogène comprend (B2) une hydroxylamine de formule 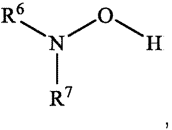 où R⁶ et R⁷ sont chacun des groupes alkyle de 1 à 6 atomes de carbone choisis indépendamment.

9. Procédé selon l'une quelconque des revendications 4 à 6, où (B) le composé réactif à fonctionnalité hydrogène comprend (B3) un énol de formule 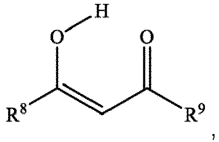 où R⁸ et R⁹ sont chacun des groupes alkyle de 1 à 6 atomes de carbone choisis indépendamment.

10. Procédé selon l'une quelconque des revendications 4 à 9, où (C) le catalyseur de métal précieux est présent, et le catalyseur de métal précieux comprend un complexe de rhodium de formule [Rh(R¹³)ₓ(R¹⁴)_{y}]_{z}, où l'indice x vaut 1 ou 2, R¹³ est un ligand 1,5-cyclooctadiène ou un ligand 2,5-norbornadiène, l'indice y vaut 0, 1 ou 2, R¹⁴ est un ligand qui peut être activé à une température inférieure à un point d'ébullition de (A) l'oligomère d'organohydrogénosiloxane à fonctionnalité alcoxy, et l'indice z vaut 1 ou 2.

11. Procédé selon la revendication 10, où R¹³ est 1,5-cyclooctadiène, R¹⁴ est Cl, l'indice x = 1, l'indice y = 1, et l'indice z = 2.

12. Procédé selon l'une quelconque des revendications 4 à 11, comprenant en outre (2) la récupération de l'oligomère d'organosiloxane à fonctionnalité alcoxy ayant le groupement réactif.

13. Procédé de préparation d'un polyorganosiloxane à fonctionnalité polyalcoxy, le procédé comprenant :
(I) la mise en pratique du procédé selon l'une quelconque des revendications 4 à 12, permettant ainsi de préparer l'oligomère d'organosiloxane à fonctionnalité alcoxy ayant le groupement réactif,
(II) la combinaison de matières premières comprenant
(a) l'oligomère d'organosiloxane à fonctionnalité alcoxy ayant le groupement réactif,
(b) un polyorganosiloxane ayant, par molécule, une moyenne d'au moins un groupement hydroxyle (silanol) lié à du silicium, et
facultativement (c) un catalyseur qui catalysera la réaction du groupement réactif de (a) l'oligomère d'organosiloxane à fonctionnalité alcoxy et du groupement silanol de (b) le polyorganosiloxane.

14. Procédé selon la revendication 13, où (b) le polyorganosiloxane a une formule unitaire :
(R¹¹₂R¹²SiO_{1/2})ₐₐ(R¹¹R¹²SiO_{2/2})_{bb}(R¹¹SiO_{3/2})_{cc}(HOSiO_{3/2})_{dd}(SiO_{4/2})ₑₑ, où chaque R¹¹ est choisi indépendamment dans le groupe constitué d'un groupe hydrocarboné monovalent de 1 à 18 atomes de carbone et d'un groupe hydrocarboné halogéné monovalent de 1 à 18 atomes de carbone, où chaque R¹² est choisi indépendamment dans le groupe constitué de OH et de R¹¹, les indices aa, bb, cc, dd, et ee représentent les nombres moyens de chaque motif, par molécule, dans la formule unitaire et les indices aa, bb, cc, dd, et ee ont des valeurs telles que aa ≥ 0, bb ≥ 0, cc ≥ 0, dd ≥ 0, ee ≥ 0, 10 000 ≥ (aa + bb + cc + dd + ee) ≥ 2, et à condition que, lorsque l'indice dd = 0, alors au moins un R¹² soit OH.

15. Procédé selon la revendication 14, où cc = dd = ee = 0, et (b) le polyorganosiloxane a la formule : 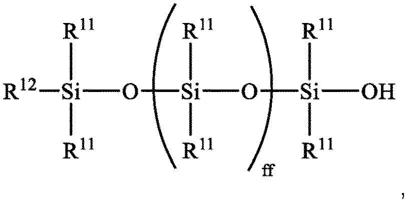 où R¹¹ et R¹² sont chacun tels que décrits ci-dessus, et l'indice ff est un nombre entier ayant une valeur moyenne allant de 0 à 1 000.

16. Procédé selon la revendication 4, où (C) le catalyseur de métal précieux est présent.
